# EUROPEAN PATENT APPLICATION

(11) **EP 4 660 985 A1**
(43) Date of publication of application: **10.12.2025**
(21) Application number: 24750220.6
(22) Date of filing: 29.01.2024
(51) Int. Cl.: G08G 5/00, B64U 20/87, G06Q 40/08, G06Q 50/26, G16Y 10/40, G16Y 20/20, G16Y 40/10

(54) **UNMANNED AERIAL VEHICLE INCIDENT RESPONSE SUPPORT SYSTEM, METHOD AND PROGRAM**

(30) Priority: 30.01.2023 JP 2023012232
(71) Applicant: KAWASAKI JUKOGYO KABUSHIKI KAISHA, Kobe-shi, Hyogo 650-8670 (JP)
(72) Inventor: MATSUMURA, Shigeru, Kobe-shi, Hyogo 650-8670 (JP); KUBO, Yoshiharu, Kobe-shi, Hyogo 650-8670 (JP); DESSEN, Yuki, Kobe-shi, Hyogo 650-8670 (JP); UMEDA, Takuya, Kobe-shi, Hyogo 650-8670 (JP); MORI, Shumpei, Kobe-shi, Hyogo 650-8670 (JP)
(74) Representative: Leinweber & Zimmermann
(86) International application number: PCT/JP2024/002691
(87) International publication number: WO 2024/162271

(57) **Abstract**

An accident response support systemt includes processing circuitry. The processing circuitry is configured to: receive an accident occurrence notification indicating that an unmanned aircraft has caused an accident; acquire position data of the unmanned aircraft that has caused the accident; and transmit a simple accident report to a supervising body, the simple accident report including the position data of the unmanned aircraft that has caused the accident.

## Description

### Technical Field

The present disclosure relates to a system, method, and program for supporting a response to an accident of an unmanned aircraft.

### Background Art

Utilization of unmanned aircrafts that fly in the air in an unmanned state has been considered in various fields.

### Citation List

### Patent Literature

PTL 1: Japanese Patent No. 7098596

### Summary of Invention

### Technical Problem

When the accident of an unmanned aircraft has occurred while a user is at a place away from the unmanned aircraft, the user cannot quickly and visually collect information of the accident.

An object of one aspect of the present disclosure is to support a response when the accident of an unmanned aircraft has occurred.

### Solution to Problem

An accident response support system according to one aspect of the present disclosure is a system supporting a response to an accident of an unmanned aircraft and includes processing circuitry. The processing circuitry is configured to receive an accident occurrence notification indicating that the unmanned aircraft has caused the accident, acquire position data of the unmanned aircraft that has caused the accident, and transmit a simple accident report to a supervising body, the simple accident report including the position data of the unmanned aircraft that has caused the accident.

An accident response support method according to one aspect of the present disclosure is a method of supporting a response to an accident of an unmanned aircraft and includes: receiving an accident occurrence notification indicating that the unmanned aircraft has caused an accident; acquiring position data of the unmanned aircraft that has caused the accident; and transmitting a simple accident report to a supervising body, the simple accident report including the position data of the unmanned aircraft that has caused the accident.

An accident response support program of an unmanned aircraft according to one aspect of the present disclosure causes at least one processor to execute the accident response support method. The program may be stored in a computer-readable storage medium. The storage medium is a non-transitory, tangible medium. The storage medium may be incorporated in or externally attached to a computer (such as a mobile information terminal, a personal computer, or a server). The storage medium may include a RAM, a ROM, an EEPROM, a storage, and the like and may be, for example, a hard disk, a flash memory, an optical disk, or the like. The program stored in the storage medium may be executed in a computer to which the storage medium is directly connected, or may be executed in a computer which is connected to the storage medium through a network, such as the Internet.

### Advantageous Effects of Invention

According to one aspect of the present disclosure, even when a user is at a place away from an unmanned aircraft that has caused an accident, accident information including position data of the unmanned aircraft that has caused the accident can be quickly informed to a supervising body. Therefore, a response when the unmanned aircraft has caused the accident can be satisfactorily supported.

### Brief Description of Drawings

FIG. 1 is a schematic diagram of an accident response support system according to an embodiment.
FIG. 2 is a block diagram of a user terminal of FIG. 1.
FIG. 3 is a block diagram of a server of FIG. 1.
FIG. 4 is a sequence diagram for explaining accident response support processing of the accident response support system of FIG. 1.
FIG. 5 is a sequence diagram subsequent to FIG. 4.
FIG. 6 is a flowchart for explaining processing of estimating a crash site by the accident response support system of FIG. 1.

### Description of Embodiments

Hereinafter, an embodiment will be described with reference to the drawings.

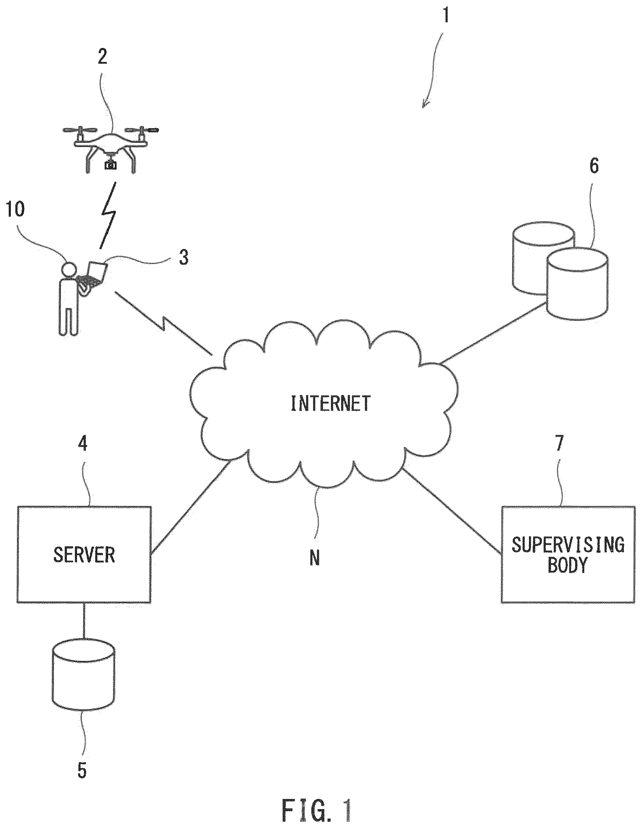

FIG. 1 is a schematic diagram of an accident response support system 1 according to an embodiment. As shown in FIG. 1, the accident response support system 1 includes a server 4 that supports a response to the accident of an unmanned aircraft 2, the response being performed by a user 10. The user 10 operates a user terminal 3 used to control the unmanned aircraft 2. The user terminal 3 communicates with the unmanned aircraft 2 through wireless communication. The user terminal 3 is connected to the server 4 through a network N. The server 4 is connected to the network N, such as the Internet. An internal database 5 is connected to the server 4. The server 4 is connected to open databases 6 through the network N. The server 4 is connected to a computer of a supervising body 7 through the network N. The supervising body 7 is a public institution, such as the Ministry of Land, Infrastructure, Transport and Tourism, but may be a private company which has received entrustment from a public supervising body.

The unmanned aircraft 2 may be, for example, a pilotless aircraft that flies without a pilot. The unmanned aircraft 2 includes a prime mover, an energy source, a propulsive force generator, a microcontroller, a communicator, sensors, and the like. The prime mover includes an electric motor. Instead of or in addition to the electric motor, the prime mover may include an internal combustion engine. The energy source includes a battery. Instead of or in addition to the battery, the energy source may include fuel. The propulsive force generator is, for example, a propeller. The sensors include a camera, a satellite positioning sensor, a gyro sensor, an acceleration sensor, an altitude sensor, an atmospheric pressure sensor, a magnetic azimuth sensor, an ultrasonic sensor, an energy remaining amount sensor, and the like. When the energy source is the battery, the energy remaining amount sensor is a battery remaining amount sensor. When the energy source is the fuel, the energy remaining amount sensor is a fuel remaining amount sensor.

The internal database 5 stores pieces of user detail information and pieces of user specific information in association with each other. The pieces of user specific information correspond to the respective pieces of user detail information. The user detail information includes, for example, a name, address, career, knowledge, ability, and the like of the user 10. The user detail information may include information, such as a business license approval number of the user 10 and a safety management system of the user 10. The user detail information may include information of an insurance company with which the user 10 has contracted. The user specific information may be, for example, a user ID, but may be a user name. The server 4 can acquire the user detail information corresponding to the user specific information by referring to the internal database 5.

The internal database 5 stores pieces of aircraft detail information and pieces of aircraft specific information in association with each other. The pieces of aircraft specific information correspond to the respective pieces of aircraft detail information. The aircraft detail information includes an aircraft name, a manufacturer, an aircraft specification, system information for securing safety in accordance with the aircraft, an aircraft flight manual, and the like. The aircraft detail information may include information indicating a flight condition by which the aircraft can fly. The aircraft specific information may be, for example, an aircraft ID, but may be the aircraft name.

The internal database 5 includes a database that stores a flight plan permitted in advance by the supervising body 7. The flight plan includes the user specific information, the aircraft specific information, a scheduled flight route, a flight permitted period of time, a scheduled takeoff place, a scheduled landing place, a scheduled takeoff time, a scheduled landing time, a flight purpose, types of cargos, and the like.

The open databases 6 include, for example, a weather information open database that stores weather information. The weather information includes weather forecast provided by a public institution, such as the Meteorological Agency, or a private institution. The open databases 6 may include a flight plan open database that stores flight plans of other aircrafts which have already been permitted to fly by the supervising body 7. The open databases 6 may include an other-aircraft flight state database that stores flight states of the other aircrafts in real time. The flight states of the other aircrafts include positional information of the other aircrafts and may further include flight speeds, flight directions, and the like.

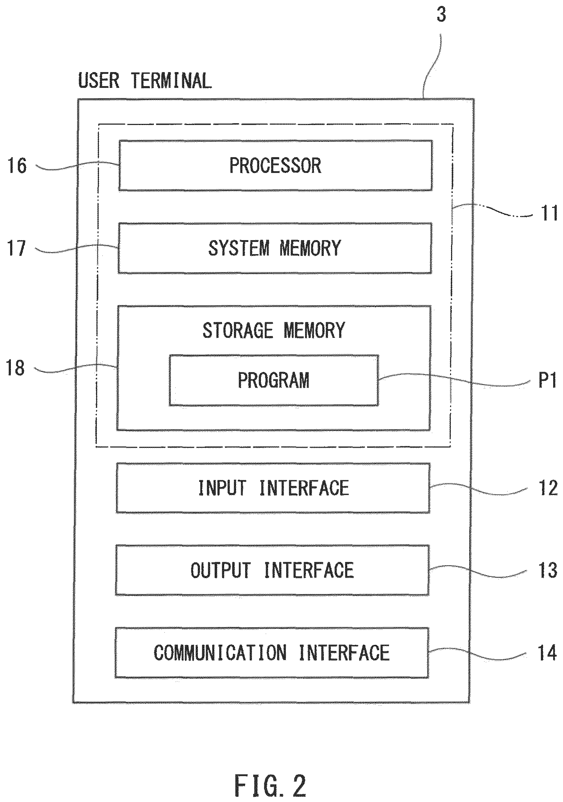

FIG. 2 is a block diagram of the user terminal 3 of FIG. 1. As shown in FIG. 2, the user terminal 3 includes first processing circuitry 11, an input interface 12, an output interface 13, and a communication interface 14. The input interface 12, the output interface 13, and the communication interface 14 are connected to the first processing circuitry 11. The first processing circuitry 11 includes a processor 16, a system memory 17, and a storage memory 18.

The processor 16 is, for example, a CPU. The system memory 17 is, for example, a RAM. The storage memory 18 is one example of a computer-readable medium and is a non-transitory, tangible medium. The storage memory 18 may include a ROM. The storage memory 18 may include a hard disk, a flash memory, or a combination thereof. The storage memory 18 stores a terminal-side accident response support program P1. A configuration in which the processor 16 executes the terminal-side accident response support program P1 read out into the system memory 17 is one example of the first processing circuitry 11.

The input interface 12 is a user interface operated by the user 10. Information for the unmanned aircraft 2, information for the server 4, and the like are input to the input interface 12. As the information for the unmanned aircraft 2, commands regarding the flight plan, the flight speed, the flight altitude, and the flight direction are input to the input interface 12. For example, an operation based on the flight plan, an ascending or descending command, a right or left movement command, a forward or backward movement command, and a right or left turn command are input to the input interface 12. As the information for the server 4, the flight plan, an accident occurrence input, and the like are input to the input interface 12. The input interface 12 includes at least one selected from, for example, a keyboard, a mouse, a touch panel, a lever, a handle, and the like.

The output interface 13 is a user interface that outputs information to the user 10. The output interface 13 includes, for example, a display. The output interface 13 may further include a speaker. The output interface 13 outputs information that is based on the information received from the unmanned aircraft 2, information that is based on the information received from the server 4, and the like. The output interface 13 may display positional information of the unmanned aircraft 2. When it is difficult for the user 10 to directly and visually confirm the unmanned aircraft 2, the user 10 may input a command for the unmanned aircraft 2 to the input interface 12 while visually confirming the position of the unmanned aircraft 2 on the output interface 13. The communication interface 14 includes: a communicator that wirelessly communicates with the unmanned aircraft 2; and a communicator that communicates with the server 4 through the network N. The input interface 12, the output interface 13, and the communication interface 14 are connected to the processor 16.

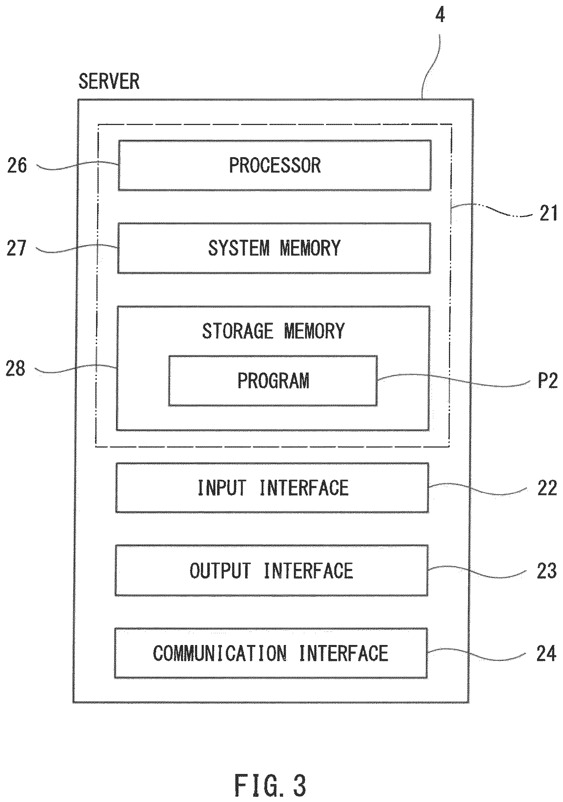

FIG. 3 is a block diagram of the server 4 of FIG. 1. As shown in FIG. 3, the server 4 includes second processing circuitry 21, an input interface 22, an output interface 23, and a communication interface 24. The input interface 22, the output interface 23, and the communication interface 24 are connected to the second processing circuitry 21. The second processing circuitry 21 includes a processor 26, a system memory 27, and a storage memory 28.

The processor 26 is, for example, a CPU. The system memory 27 is, for example, a RAM. The storage memory 28 is one example of a computer-readable medium and is a non-transitory, tangible medium. The storage memory 28 may include a ROM. The storage memory 28 may include a hard disk, a flash memory, or a combination thereof. The storage memory 28 stores a server-side accident response support program P2. A configuration in which the processor 26 executes the server-side accident response support program P2 read out into the system memory 27 is one example of the second processing circuitry 21.

The input interface 22 is a user interface operated by an operator who manages the server 4. The input interface 22 includes at least one selected from, for example, a keyboard, a mouse, a touch panel, a lever, a handle, and the like. The output interface 23 is a user interface that outputs information to the operator who manages the server 4. The output interface 23 includes, for example, a display. The communication interface 24 includes a communicator that communicates with the user terminal 3, the open databases 6, and the supervising body 7 through the network N.

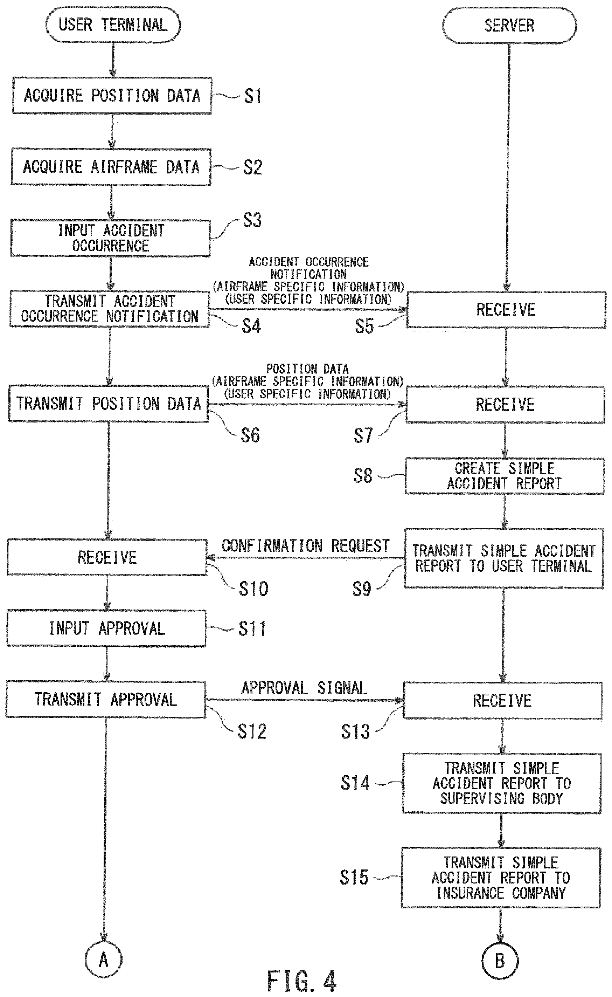

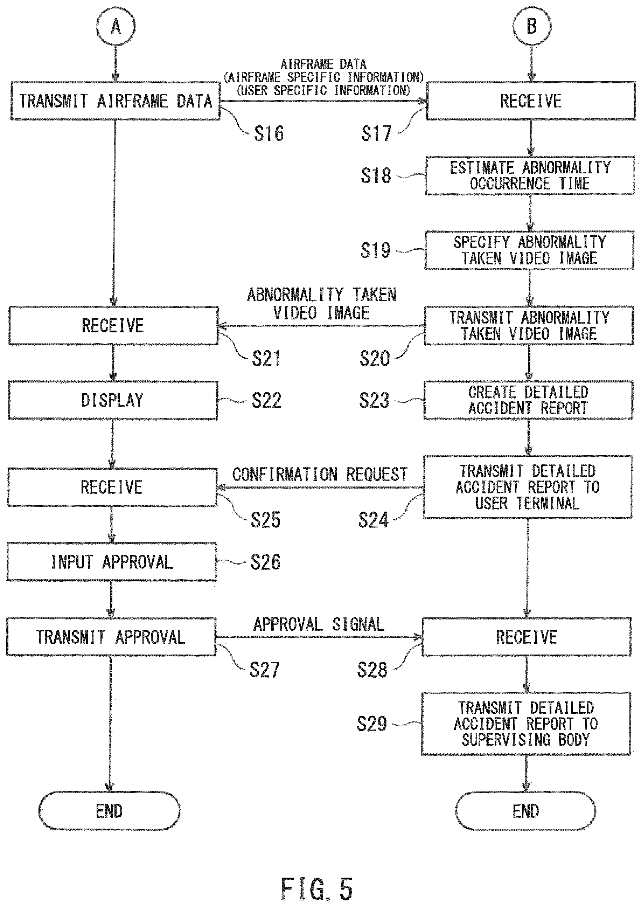

FIG. 4 is a sequence diagram for explaining accident response support processing of the accident response support system 1 of FIG. 1. FIG. 5 is a sequence diagram subsequent to FIG. 4. Hereinafter, the processing of the accident response support system 1 will be described based on the flows of FIGS. 4 and 5 with suitable reference to the configurations shown in FIGS. 1 to 3. In the following description, the processing of the user terminal 3 is executed by the first processing circuitry 11, and the processing of the server 4 is executed by the second processing circuitry 21.

The user terminal 3 wirelessly communicates with the unmanned aircraft 2, which is flying, to sequentially acquire position data detected by the satellite positioning sensor of the unmanned aircraft 2 (Step S1). The user terminal 3 wirelessly communicates with the unmanned aircraft 2, which is flying, to sequentially acquire aircraft data detected by various sensors of the unmanned aircraft 2 (Step S2). The aircraft data may include video image data taken by the camera of the unmanned aircraft 2. The aircraft data may include measurement data measured by the gyro sensor, acceleration sensor, atmospheric pressure sensor, magnetic azimuth sensor, ultrasonic sensor, and energy remaining amount sensor of the unmanned aircraft 2. The order of Steps S1 and S2 is not especially limited. Subsequently, Steps S1 and S2 may be continuously executed as long as the unmanned aircraft 2 and the user terminal 3 can communicate with each other.

When the user 10 grasps the accident of the unmanned aircraft 2 by an abnormality of a video image taken by the camera, an abnormality of the aircraft data displayed on the user terminal 3 such as an abnormality of altitude information of the unmanned aircraft 2, communication cut, or the like, the user 10 operates the user terminal 3 to input an accident occurrence (Step S3). In accordance with the input of the accident occurrence by the user 10, the user terminal 3 transmits an accident occurrence notification to the server 4 together with the user specific information, such as the user ID of the user 10, and the aircraft specific information, such as the aircraft ID of the unmanned aircraft 2 (Step S4). The server 4 receives the accident occurrence notification from the user terminal 3 (Step S5).

The user terminal 3 transmits the position data of the unmanned aircraft 2 to the server 4 together with the user specific information of the user 10 and the aircraft specific information of the unmanned aircraft 2 (Step S6). The server 4 receives the position data of the unmanned aircraft 2 from the user terminal 3 (Step S7). The position data of the unmanned aircraft 2 may be transmitted together with the accident occurrence notification. Moreover, when the communication between the unmanned aircraft 2 and the the user terminal 3 is cut by the accident, the position data and the aircraft data which have been received by the user terminal 3 before the above communication is cut are transmitted to the server 4.

In accordance with the reception of the accident occurrence notification, the server 4 creates a simple accident report (Step S8). The simple accident report includes the position data of the unmanned aircraft 2 and also includes the user name and the aircraft name which are specified based on the user specific information and the aircraft specific information with reference to the internal database 5. The simple accident report includes a date and time of the reception of the accident occurrence notification. The simple accident report may include an impression when the operator who manages the server 4 has seen the camera video image included in the aircraft data. The server 4 transmits the simple accident report to the user terminal 3 (Step S9). The user terminal 3 receives the simple accident report from the server 4 (Step S10). The user 10 confirms the contents of the simple accident report by the user terminal 3. When the user 10 determines that the contents include no mistakes, the user 10 inputs an approval to the user terminal 3 (Step S11).

The user terminal 3 transmits an approval signal to the server 4 (Step S12). The approval signal indicates that the simple accident report has been approved. The server 4 receives the approval signal from the user terminal 3 (Step S13). When the server 4 receives the approval signal, the server 4 transmits the simple accident report to the supervising body 7 (Step S14). The simple accident report is a prompt report, and the details of the accident are reported to the supervising body 7 by a below-described detailed accident report. Moreover, the server 4 also transmits the simple accident report to an insurance company (Step S15). The transmission of the simple accident report to the insurance company may be omitted.

The user terminal 3 transmits to the server 4 the aircraft data received from the unmanned aircraft 2 (Step S16). When the communication between the unmanned aircraft 2 and the the user terminal 3 is cut by the accident, the aircraft data which has been received by the user terminal 3 before the above communication cut is transmitted to the server 4. The server 4 receives the aircraft data from the user terminal 3 (Step S17).

The server 4 refers to the aircraft data and estimates a time at which the abnormality of the unmanned aircraft 2 has occurred (Step S18). For example, the server 4 may estimate, as an abnormality occurrence time, a time point at which acceleration of the unmanned aircraft 2 has exceeded a predetermined allowable limit. When the server 4 detects that the acceleration of the unmanned aircraft 2 has exceeded the predetermined allowable limit, the server 4 may determine that an impact is generated in the unmanned aircraft 2, and may estimate a time point at which the impact is generated, as the abnormality occurrence time. The server 4 may acquire a posture angle of the unmanned aircraft 2 from the sensor mounted on the unmanned aircraft 2, and may estimate a time point at which the posture angle of the unmanned aircraft 2 has deviated from a predetermined allowable range, as the abnormality occurrence time. The server 4 may estimate a time point at which the value detected by the altitude sensor of the unmanned aircraft 2 has become an abnormal value, i.e., substantially zero, as the abnormality occurrence time. The server 4 may estimate a time point at which it is determined that the altitude information of the satellite positioning sensor of the unmanned aircraft 2 indicates abnormal descending, as the abnormality occurrence time. The server 4 may estimate a time point at which it is determined that the prime mover of the unmanned aircraft 2 has stopped, as the abnormality occurrence time.

From the video image data taken by the camera of the unmanned aircraft 2, the server 4 extracts a video image corresponding to a time determined based on the estimated abnormality occurrence time. For example, from the video image data taken by the camera of the unmanned aircraft 2, the server 4 extracts a video image corresponding to a predetermined time including the abnormality occurrence time, and specifies the extracted video image as an abnormality taken video image (Step S19).

The server 4 transmits the specified abnormality taken video image to the user terminal 3 (Step S20). The user terminal 3 receives the abnormality taken video image from the server 4 (Step S21). The user terminal 3 displays the received abnormality taken video image on the display of the output interface 13 (Step S22). Thus, the user 10 can grasp an accident situation by watching the camera video image of the unmanned aircraft 2. Step S19 may be executed by the user terminal 3. To be specific, the server 4 may transmit the abnormality occurrence time to the user terminal 3, and the user terminal 3 may extract the video image corresponding to the time determined based on the abnormality occurrence time, from the video image data taken by the camera of the unmanned aircraft 2, and specify the extracted video image as the abnormality taken video image.

The foregoing has described an example in which Steps S16 to S22 are executed after the simple accident report is transmitted in Step S14. However, Steps S16 to S22 may be executed before the simple accident report is created. In this case, the server 4 may include in the simple accident report the abnormality occurrence time estimated in Step S18 and the abnormality taken video image specified in Step S19.

The server 4 may output a command that requests the dispatch of a movable body, such an automobile or an aircraft, to an accident scene. In this case, the server 4 may receive scene information which includes information detected by the movable body that has been dispatched to the accident scene or information input to an information processor by an operator of the movable body that has been dispatched to the accident scene. For example, the scene information may include: information regarding whether or not the unmanned aircraft 2 that caused the accident has been collected; information regarding an exact place where the unmanned aircraft 2 has fallen; or information regarding damage states of objects located around the accident scene.

Next, the server 4 creates the detailed accident report (Step S23). The detailed accident report includes as the accident occurrence spot the position data received from the user terminal 3. The detailed accident report includes the aircraft data received from the user terminal 3. The aircraft data may include measurement data measured by at least one of the gyro sensor, acceleration sensor, atmospheric pressure sensor, magnetic azimuth sensor, ultrasonic sensor, and energy remaining amount sensor of the unmanned aircraft 2.

The detail information report includes the user detail information and the aircraft detail information which are acquired from the internal database 5. Specifically, for example, the detailed accident report includes the name and address of the user 10 and may include the career, knowledge, ability, and the like of the user 10. The detailed accident report may include: information, such as the business license approval number of the user 10 and the safety management system of the user 10; information, such as the insurance company with which the user 10 contracts; and the like. The detailed accident report includes the aircraft name, the manufacturer, and the aircraft specification and may include the system information for securing safety in accordance with the aircraft, and the like.

The detail information report includes the flight plan of the unmanned aircraft 2 which is acquired from the internal database 5. The detailed accident report includes the scheduled flight route, the flight permitted period of time, the scheduled takeoff place, the scheduled landing place, the scheduled takeoff time, the scheduled landing time, the flight purpose, the types of the cargos, and the like. The detail information report may include the weather information acquired from the open databases 6. The detailed accident report may include the flight states of the other aircrafts in real time in a predetermined range that is based on the accident occurrence spot of the unmanned aircraft 2, the flight states being acquired from the open databases 6. The detailed accident report may include at least one of the abnormality occurrence time or the abnormality taken video image.

The detailed accident report may include the scene information including: the information regarding whether or not the unmanned aircraft 2 has been collected; the information regarding the exact place where the unmanned aircraft 2 has fallen; or the information regarding the damage states of the objects located around the crash site of the unmanned aircraft 2. The scene information may be detected by the movable body that has been dispatched to the accident scene, and may be transmitted to the server 4. Or, the scene information may be input to the information processor by the operator of the movable body that has been dispatched to the accident scene, and may be transmitted from the information processor to the server 4.

The server 4 transmits the detailed accident report to the user terminal 3 (Step S24). The user terminal 3 receives the accident report from the server 4 (Step S25). The user 10 confirms the contents of the detailed accident report by the user terminal 3. When the user 10 determines that the contents include no mistakes, the user 10 inputs an approval to the user terminal 3 (Step S26).

The user terminal 3 transmits an approval signal to the server 4 (Step S27). The approval signal indicates that the detailed accident report has been approved. The server 4 receives the approval signal from the user terminal 3 (Step S28). When the server 4 receives the approval signal, the server 4 transmits the detailed accident report to the supervising body 7 (Step S29).

According to the above configuration, the simple accident report including the position data of the unmanned aircraft 2 that has caused the accident can be quickly informed to the supervising body 7. After that, the detailed accident report created so as to include the specific contents based on the aircraft data can be presented to the supervising body 7. Therefore, even when the user 10 is at a place away from the unmanned aircraft 2 that has caused the accident, the response to the accident by the user 10 can be satisfactorily supported while realizing both of the quickness and the concreteness.

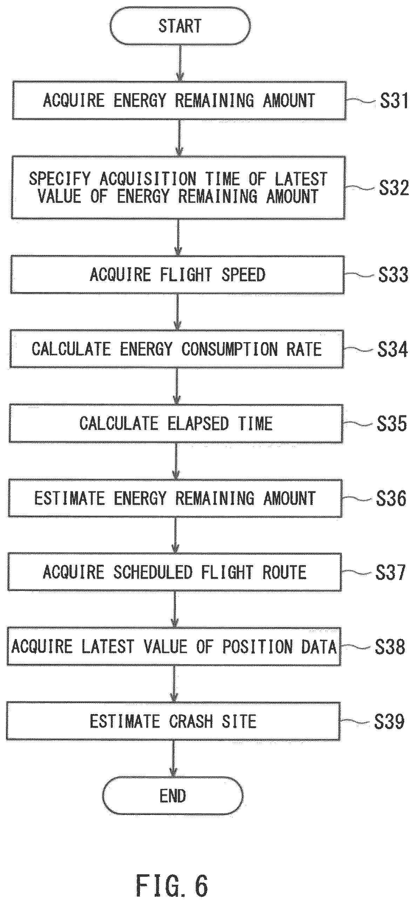

FIG. 6 is a flowchart for explaining processing of estimating the crash site by the accident response support system 1 of FIG. 1. When the communication between the unmanned aircraft 2 and the the user terminal 3 is cut by the accident, the crash site of the unmanned aircraft 2 is unknowable. Therefore, the following will describe the method of estimating the crash site of the unmanned aircraft 2. When the user terminal 3 determines that the communication between the unmanned aircraft 2 and the user terminal 3 has been cut, the user terminal 3 transmits information indicating the communication cut to the server 4. When the server 4 receives this communication cut information, the server 4 executes the estimating processing of FIG. 6. The following will describe a case where the estimating processing of FIG. 6 is executed by the server 4. However, the estimating processing of FIG. 6 may be executed by the user terminal 3 or may be executed by the user terminal 3 and the server 4 in cooperation.

The server 4 acquires energy remaining amount data from the user terminal 3. The energy remaining amount data is measured by the energy remaining amount sensor mounted on the unmanned aircraft 2 before the communication between the unmanned aircraft 2 and the user terminal 3 is cut (Step S31). The energy remaining amount data is accompanied by a data acquisition time. The server 4 specifies an acquisition time of a latest value of the energy remaining amount data (Step S32). The server 4 acquires the flight speed of the unmanned aircraft 2 (Step S33). The flight speed of the unmanned aircraft 2 in Step S33 may be an average flight speed calculated based on a flight speed history obtained from the aircraft data, may be the flight speed immediately before the accident, or may be a predetermined value.

The server 4 refers to the history of the energy remaining amount data before the communication is cut, and calculates, as an energy consumption rate, a reduced amount of the energy remaining amount per unit time during the flight of the unmanned aircraft 2 (Step S34). The server 4 may correct the energy consumption rate based on the flight speed of the unmanned aircraft 2 which has been acquired in Step S33.

The server 4 refers to an internal or external timepiece of the server 4 to acquire a current time, and calculates an elapsed time since the acquisition time of the latest value of the energy remaining amount data (Step S35). The server 4 calculates the energy remaining amount by subtracting an energy consumption from the latest value of the energy remaining amount data (Step S36). The energy consumption is obtained by multiplying the energy consumption rate per unit time by the elapsed time. In this way, even when the communication between the unmanned aircraft 2 and the user terminal 3 is cut during the flight of the unmanned aircraft 2, the energy remaining amount can be estimated.

Next, the server 4 refers to the flight plan of the unmanned aircraft 2 which is stored in the internal database 5, and acquires the scheduled flight route of the unmanned aircraft 2 (Step S37). The server 4 acquires the latest value of the position data of the unmanned aircraft 2 (Step S38).

The server 4 estimates the crash site of the unmanned aircraft 2 based on the energy consumption rate per unit time which is acquired in Step S34, the acquisition time of the latest value of the energy remaining amount data which is acquired by the method in Step S36, the flight speed acquired in Step S33, and the scheduled flight route acquired in Step S37 (Step S39). Specifically, based on the energy consumption rate per unit time, the server 4 calculates an elapsed time that is a period of time from the acquisition time of the latest value of the energy remaining amount data to a time point at which the energy remaining amount becomes zero.

The server 4 calculates an estimated travel distance by multiplying the elapsed time by the acquired flight speed of the unmanned aircraft 2. The estimated travel distance is a distance from a place indicated by the latest value of the position data to a place where the energy remaining amount of the unmanned aircraft 2 has become zero. The server 4 regards, as the crash site of the unmanned aircraft 2, a place where the unmanned aircraft 2 reaches by advancing by the calculated estimated travel distance from the place indicated by the latest value of the position data toward the scheduled landing place on the scheduled flight route of the unmanned aircraft 2. The crash site estimated as above may be included in the simple accident report created in Step S8 or the detailed accident report created in Step S23.

The method of estimating the crash site of the unmanned aircraft 2 at the time of the communication cut is not limited to the above. For example, when the unmanned aircraft 2 is programmed in advance to stand by at a place corresponding to a time point at which the communication of the unmanned aircraft 2 has been cut, the server 4 may estimate, as the crash site, a position indicated by the latest value of the position data received from the user terminal 3. When the unmanned aircraft 2 is programmed to move to a predetermined specific place at the time of the communication cut, the server 4 may estimate, as a crash area, a place where the unmanned aircraft 2 reaches by advancing by the estimated travel distance from the place indicated by the latest value of the position data received from the user terminal 3 toward the specific place, or an area where the unmanned aircraft 2 reaches by advancing along the route by the estimated travel distance from the place indicated by the latest value of the position data received from the user terminal 3.

Part of the program P1 or the entire program P1 in the above embodiment may be executed by the server 4 instead of the user terminal 3. Part of the program P2 in the above embodiment may be executed by the user terminal 3 instead of the server 4.

The foregoing has described the embodiment as an example of the technology disclosed in the present application. However, the technology in the present disclosure is not limited to this and is applicable to embodiments in which modifications, replacements, additions, omissions, and the like have been suitably made. Moreover, the components shown in the attached drawings and the detailed explanations include not only components essential to solve the problems but also components for exemplifying the above technology and not essential to solve the problems.

The functionality of the elements disclosed herein may be implemented using circuitry or processing circuitry which includes general purpose processors, special purpose processors, integrated circuits, ASICs (Application Specific Integrated Circuits), FPGA (Field Programmable Gate Array), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The following aspects disclose preferred embodiments.

### First Aspect

An accident response support system,
the accident response support system supporting a response to an accident of an unmanned aircraft,
the system including processing circuitry configured to
receive an accident occurrence notification indicating that the unmanned aircraft has caused the accident,
acquire position data of the unmanned aircraft that has caused the accident, and
transmit a simple accident report to a supervising body, the simple accident report including the position data of the unmanned aircraft that has caused the accident.

According to this configuration, even when the user is at a place away from the unmanned aircraft that has caused the accident, the accident information including the position data of the unmanned aircraft that has caused the accident can be quickly informed to the supervising body. Therefore, the response when the unmanned aircraft has caused the accident can be satisfactorily supported.

### Second Aspect

The accident response support system according to the first aspect, wherein the processing circuitry is further configured to
acquire aircraft data measured by a sensor mounted on the unmanned aircraft,
after the simple accident report is transmitted to the supervising body, create a detailed accident report based on the aircraft data, and
transmit the detailed accident report to the supervising body.

According to this configuration, while quickly informing the supervising body of the accident information at the time of the occurrence of the accident, the detailed accident report created based on the aircraft data can be presented to the supervising body.

### Third Aspect

The accident response support system according to the second aspect, wherein:
the processing circuitry includes
   first processing circuitry of a user terminal operated by a user and
   second processing circuitry of a server that is communicable with the user terminal; and
the second processing circuitry is further configured to transmit the simple accident report to the user terminal before transmitting the simple accident report to the supervising body or transmit the detailed accident report to the user terminal before transmitting the detailed accident report to the supervising body.

According to this configuration, the user can be urged to confirm the contents of the report before the report is transmitted to the supervising body.

### Fourth Aspect

The accident response support system according to any one of the first to third aspects, wherein:
the processing circuitry is further configured to
   acquire aircraft data measured by a sensor which is mounted on the unmanned aircraft and includes a camera,
   estimate an abnormality occurrence time based on the aircraft data, and
   specify an abnormality taken video image that is a taken video image of the camera at a time determined based on the estimated abnormality occurrence time;
the processing circuitry includes
   first processing circuitry of a user terminal operated by a user and
   second processing circuitry that is communicable with the user terminal; and
the first processing circuitry is configured to display the abnormality taken video image on a display of the user terminal.

According to this configuration, the user can grasp the accident situation by watching the camera video image of the unmanned aircraft at a time that is based on the time at which the abnormality has occurred in the unmanned aircraft that has caused the accident.

### Fifth Aspect

The accident response support system according to any one of the first to fourth aspects, wherein:
the processing circuitry is further configured to
   determine whether or not communication between a user terminal and the unmanned aircraft has been cut during flight of the unmanned aircraft,
   acquire energy remaining amount data measured by an energy remaining amount sensor mounted on the unmanned aircraft, and
   when the processing circuitry determines that the communication has been cut, estimate an energy remaining amount; and
estimating the energy remaining amount includes
   specifying an acquisition time of a latest value of the energy remaining amount data,
   acquiring an energy consumption rate indicating an energy consumption of the unmanned aircraft per unit time,
   calculating an elapsed time since the acquisition time of the latest value, and
   calculating the energy remaining amount by subtracting the energy consumption from the latest value of the energy remaining amount data, the energy consumption being obtained by multiplying the energy consumption rate by the elapsed time.

According to this configuration, even when the communication between the unmanned aircraft and the operation terminal is cut during the flight of the unmanned aircraft, the energy remaining amount can be estimated.

### Sixth Aspect

The accident response support system according to the fifth aspect, wherein the processing circuitry is further configured to
acquire a scheduled flight route of the unmanned aircraft and
when the processing circuitry determines that the communication has been cut, estimate a crash site of the unmanned aircraft based on the scheduled flight route, the latest value of the position data of the unmanned aircraft, and the elapsed time that is a period of time from the acquisition time of the latest value to a time point at which the calculated energy remaining amount becomes zero.

According to this configuration, even when the communication between the unmanned aircraft and the user terminal is cut by the occurrence of the accident, the crash site of the unmanned aircraft can be estimated.

### Seventh Aspect

An accident response support method,
the accident response support method of supporting a response to an accident of an unmanned aircraft,
the accident response support method including:
   receiving an accident occurrence notification indicating that the unmanned aircraft has caused an accident;
   acquiring position data of the unmanned aircraft that has caused the accident; and
   transmitting a simple accident report to a supervising body, the simple accident report including the position data of the unmanned aircraft that has caused the accident.

According to this method, even when the user is at a place away from the unmanned aircraft that has caused the accident, the accident information including the position data of the unmanned aircraft that has caused the accident can be quickly informed to the supervising body. Therefore, the response when the unmanned aircraft has caused the accident can be satisfactorily supported.

### Eighth Aspect

An accident response support program for an unmanned aircraft,
the accident response support program causing at least one processor to execute the accident response support method according to the seventh aspect.

### Reference Signs List

- 1: accident response support system
- 2: unmanned aircraft
- 3: user terminal
- 4: server
- 5: internal database
- 6: open database
- 7: supervising body
- 10: user
- 11: first processing circuitry
- 16: processor
- P1: terminal-side accident response support program
- 21: second processing circuitry
- 26: processor
- P2: server-side accident response support program

## Claims

1. An accident response support system supporting a response to an accident of an unmanned aircraft,
the system comprising processing circuitry configured to
receive an accident occurrence notification indicating that the unmanned aircraft has caused the accident,
acquire position data of the unmanned aircraft that has caused the accident, and
transmit a simple accident report to a supervising body, the simple accident report including the position data of the unmanned aircraft that has caused the accident.

2. The accident response support system according to claim 1, wherein the processing circuitry is further configured to
acquire aircraft data measured by a sensor mounted on the unmanned aircraft,
after the simple accident report is transmitted to the supervising body, create a detailed accident report based on the aircraft data, and
transmit the detailed accident report to the supervising body.

3. The accident response support system according to claim 2, wherein:
the processing circuitry includes
first processing circuitry of a user terminal operated by a user and
second processing circuitry of a server that is communicable with the user terminal; and
the second processing circuitry is further configured to transmit the simple accident report to the user terminal before transmitting the simple accident report to the supervising body or transmit the detailed accident report to the user terminal before transmitting the detailed accident report to the supervising body.

4. The accident response support system according to any one of claims 1 to 3, wherein:
the processing circuitry is further configured to
acquire aircraft data measured by a sensor which is mounted on the unmanned aircraft and includes a camera,
estimate an abnormality occurrence time of the unmanned aircraft based on the aircraft data, and
specify an abnormality taken video image that is a taken video image of the camera at a time determined based on the estimated abnormality occurrence time;
the processing circuitry includes
first processing circuitry of a user terminal operated by a user and
second processing circuitry that is communicable with the user terminal; and
the first processing circuitry is configured to display the abnormality taken video image on a display of the user terminal.

5. The accident response support system according to any one of claims 1 to 4, wherein:
the processing circuitry is further configured to
determine whether or not communication between a user terminal and the unmanned aircraft has been cut during flight of the unmanned aircraft,
acquire energy remaining amount data measured by an energy remaining amount sensor mounted on the unmanned aircraft, and
when the processing circuitry determines that the communication has been cut, estimate an energy remaining amount; and
estimating the energy remaining amount includes
specifying an acquisition time of a latest value of the energy remaining amount data,
acquiring an energy consumption rate indicating an energy consumption of the unmanned aircraft per unit time,
calculating an elapsed time since the acquisition time of the latest value, and
calculating the energy remaining amount by subtracting the energy consumption from the latest value of the energy remaining amount data, the energy consumption being obtained by multiplying the energy consumption rate by the elapsed time.

6. The accident response support system according to claim 5, wherein the processing circuitry is further configured to
acquire a scheduled flight route of the unmanned aircraft and
when the processing circuitry determines that the communication has been cut, estimate a crash site of the unmanned aircraft based on the scheduled flight route, the latest value of the position data of the unmanned aircraft, and an elapsed time that is a period of time from the acquisition time of the latest value to a time point at which the calculated energy remaining amount becomes zero.

7. An accident response support method supporting a response to an accident of an unmanned aircraft,
the accident response support method comprising:
receiving an accident occurrence notification indicating that the unmanned aircraft has caused an accident;
acquiring position data of the unmanned aircraft that has caused the accident; and
transmitting a simple accident report to a supervising body, the simple accident report including the position data of the unmanned aircraft that has caused the accident.

8. An accident response support program for an unmanned aircraft,
the accident response support program causing at least one processor to execute the accident response support method according to claim 7.
